# EUROPÄISCHE PATENTSCHRIFT

(11) **EP 2 834 079 B1**
(45) Veröffentlichungstag und Bekanntmachung des Hinweises auf die Patenterteilung: **03.04.2019**
(21) Anmeldenummer: 12741023.1
(22) Anmeldetag: 02.08.2012
(51) Int. Cl.: B44C 5/04

(54) **PVC-KUNSTSTOFFPANEEL**
PVC-PLASTIC PANEL
PANNEAU EN MATIÈRE PLASTIQUE PVC

(30) Priorität: 02.04.2012 WO PCT/EP2012/055967
(43) Veröffentlichungstag der Anmeldung: 11.02.2015
(60) Teilanmeldung: 16177136.5
(73) Patentinhaber: Xylo Technologies AG, 9052 Niederteufen (CH)
(72) Erfinder: DÖHRING, Dieter, 01561 Großenhain (DE)
(74) Vertreter: Mader, Joachim
(86) Internationale Anmeldenummer: PCT/EP2012/065146
(87) Internationale Veröffentlichungsnummer: WO 2013/149680

(56) Entgegenhaltungen:
- WO-A1-2008/061791
- WO-A1-2008/122668
- DE-A1- 19 702 476
- DE-A1-102009 044 092
- DE-U1-202004 018 710
- US-A1- 2004 071 978
- US-A1- 2004 146 695
- US-A1- 2004 219 339

## Beschreibung

### 1. Gebiet der Erfindung

Die vorliegende Erfindung betrifft ein verbessertes Kunstoffpaneel, insbesondere basierend auf einer Trägerschicht aus PVC, sowie ein Verfahren zu dessen Herstellung.

### 2. Hintergrund der Erfindung

Polyvinylchlorid wird seit langem zur Herstellung von Fußbodenbelägen verwendet. Polyvinylchlorid (PVC) ist ein thermoplastischer Werkstoff, der ohne die Zugabe von Hilfsstoffen hart und spröde ist. Die mechanischen Eigenschaften von PVC lassen sich jedoch durch die Zugabe geeigneter Hilfsstoffe, wie etwa Weichmacher, Füllstoffe, Färbemittel, Stabilisatoren, etc. in einem weite Bereich einstellen. Aus diesem Grund wird hierin unter dem Begriff "PVC" kein reines Polyvinylchlorid verstanden, sondern PVC mit den üblicherweise hinzugefügten und für den praktischen Einsatz notwendigen Hilfsstoffen.

Ein typisches Beispiel aus dem Stand der Technik ist in der Druckschrift DE 10 2006 058 655 A1 beschrieben. In dieser Druckschrift wird ein Bodenpaneel in der Form eines mehrschichtigen, rechteckigen Laminats mit einer Trägerschicht aus einem weichem Polyvinylchlorid und einer auf der Polyvinylchloridschicht angeordneten Dekorpapierschicht offenbart. Die Aufbringung einer Dekorpapierbahn ist technisch aufwendig und mit erheblichen Kosten verbunden.

Aus der DE 10 2006 029 963 A1 ist ein Bodenbelag aus Polyvinylchlorid bekannt, der mit einer strapazierfähigen Lackschicht beschichtet ist, um die Haltbarkeit des PVC-Bodenbelags zu verbessern. Die Lackschicht basiert auf einem Acrylatharz und soll mittels Strahlung ausgehärtet werden. Der Kern dieser Druckschrift liegt in der Zugabe von elektrisch leitfähigen Substanzen in das Acrylatharz, um den fertigen Bodenbelag mit antistatischen und/oder elektrisch leitenden Eigenschaften zu versehen.

Die WO 2008/061791 A1 desselben Anmelders stellt eine Weiterentwicklung einer Lackbeschichtung dar. Der Inhalt dieser Druckschrift wird hiermit durch in Bezugnahme vollständig aufgenommen. Der Kern der Verbesserung dieser Druckschrift liegt darin, dass auf die Oberfläche eines Paneels zwei flüssige, unterschiedliche Polymerschichten Nass-in-Nass aufgetragen werden, so dass eine teilweise Vermischung der Beschichtungsmittel stattfindet. Diese beiden Nass-in-Nass aufgetragenen Schichten werden dann gemeinsam ausgehärtet, wobei die ausgehärtete resultierende Beschichtung aufgrund der teilweisen Durchmischung einen Härtegradient aufweist, wobei die Härte der Beschichtung mit zunehmender Tiefe von der Oberfläche der resultierenden Beschichtung her gesehen abnimmt.

Aus der US 2004/0146695 ist ein Verfahren zum Herstellen von Oberflächenabdeckungen, wie Boden- und Wandplatten beschrieben. Dabei werden insbesondere rechteckige Vinylplatten beschrieben, die die Merkmale gemäß dem Oberbegriff von Anspruch 1 aufweisen. Im Lichte dieser bekannten PVC Beläge stellt sich die vorliegende Erfindung die Aufgabe, ein Paneel, insbesondere ein Wand-, Decken- oder Fußbodenpaneel bereitzustellen, das eine Trägerschicht aus einem Kunststoffmaterial umfasst, wobei ein solches kostengünstiger und auf einfachere Weise hergestellt werden soll als dies beispielsweise aus der DE 10 2006 058 655 A1 bekannt ist. Eine weitere Aufgabe liegt in der Bereitstellung eines derartigen Paneels, dass eine verbesserte Haltbarkeit und qualitativ besonders hochwertige dekorative Muster aufweist.

Diese und andere Aufgaben, die beim Lesen der vorliegenden Beschreibung noch genannt werden oder vom Fachmann erkannt werden können, werden mit einem Paneel nach Anspruch 1 und einem Verfahren zu dessen Herstellung nach Anspruch 12 gelöst.

### 3. Ausführliche Beschreibung der Erfindung.

Gemäß der vorliegenden Erfindung wird ein Paneel bereitgestellt, das eine Trägerschicht aus einem Kunststoffmaterial und eine Grundierungsschicht umfasst, wobei die Grundierungsschicht ein darauf aufgedrucktes dekoratives Muster (d.h. eine Dekorschicht) umfasst und über der Grundierungsschicht eine Polymerschicht vorgesehen ist. Die Polymerschicht basiert dabei generell bevorzugt auf einem polymerisierbaren Harz, wie insbesondere einem Acrylatharz. Generell bevorzugt weist die ausgehärtete Polymerschicht einen Härtegradienten auf gemäß der eingangs beschriebenen WO 2008/061791 desselben Anmelders. Erfindungsgemäß weist die zum Drucken des dekorativen Musters (18) verwendete Druckfarbe ein polymerisierbares Acrylat und/oder N-Vinylcaprolactam auf, und die Druckfarbe und die Polymerschicht werden gemeinsam ausgehärtet.

Im Unterschied zum eingangs genannten Stand der Technik DE 10 2006 058 655 A1 stellt die vorliegende Erfindung ein Paneel bereit, das kein separates Dekorpapier erfordert, da das dekorative Muster auf eine auf der Trägerschicht angeordneten Grundierungsschicht unmittelbar aufgedruckt wird bzw. ist.

Gemäß der vorliegenden Erfindung wird weiterhin ein Verfahren zum Herstellen eines Paneels, insbesondere eines Wand-, Decken- oder Fußbodenpaneels bereitgestellt. Bei diesem Verfahren wird in einem ersten Arbeitsschritt eine Trägerschicht aus einem Kunststoffmaterial bereitgestellt. Auf diese Trägerschicht wird anschließend eine Grundierungsschicht aufgetragen und ein dekoratives Muster auf diese aufgedruckt, wobei die zum Drucken des dekorativen Musters verwendete Druckfarbe ein polymerisierbares Acrylat und/oder N-Vinylcaprolactam enthält. Nach dem Aufdruck des dekorativen Musters auf die Grundierungsschicht wird eine flüssige erste Polymerschicht auf die Grundierungsschicht aufgetragen. In einem weiteren Schritt werden die Grundierungsschicht und die Polymerschicht ausgehärtet, wobei zumindest die Druckfarbe und die aufgetragene Polymerschicht gemeinsam ausgehärtet werden. Optional kann zumindest eine zweite Polymerschicht flüssig auf die noch feuchte erste Polymerschicht aufgetragen werden, so dass eine teilweise Vermischung der Beschichtungsmittel stattfindet Die Aushärtung der Grundierungsschicht und der Polymerschicht(en) kann in einem Verfahrensschritt aber auch nacheinander in zwei separaten Verfahrensschritten erfolgen. Unter Härten oder Aushärtung einer Polymerschicht wird hierbei die chemische Reaktion verstanden, die bei der Polymerisation stattfindet. Hiervon zu unterscheiden ist das Trocknen derartiger Schichten, bei dem lediglich der Wassergehalt reduziert bzw. entfernt wird.

In einer bevorzugten Ausführungsform umfasst das Kunststoffmaterial der Trägerschicht Polyvinylchlorid bzw. besteht die Trägerschicht im Wesentlichen aus Polyvinylchlorid (und den notwendigen Hilfsstoffen wie Eingangs erwähnt). Polyvinylchlorid hat sich als besonders vorteilhaftes Material zur Ausbildung der Trägerschicht herausgestellt, da dieses Material nicht nur besonders strapazierfähig ist, sondern darüber hinaus auch besonders vorteilhafte trittschallabsorbierende Eigenschaften hat. Alternativ zum bevorzugten Polyvinylchlorid können auch andere Kunststoffe wie Polypropylen oder Polyethylen oder sogenannte WPC's (Wood Polymer Composites) eingesetzt werden, je nachdem, welche Eigenschaften das Paneel aufweisen soll.

In einer weiteren bevorzugten Ausführungsform ist die Trägerschicht aus einem mit Weichmachern versetztem Kunststoffmaterial gebildet, wobei hierfür entsprechende Weichmacher, insbesondere Diethylexylphthala und/oder Diisonoylphthalat verwendet werden. In die Trägerschicht werden dabei zwischen 5 bis 50 Gewichts-%, bevorzugt zwischen 10 bis 20 Gewichts-%, besonderes bevorzugt zwischen 12 bis 17 Gewichts-% eines geeigneten Weichmachers eingebracht.

In einer weiteren bevorzugten Ausführungsform weist die Trägerschicht eine Dicke zwischen 3 und 20 mm, bevorzugt zwischen 4 und 15 mm, mehr bevorzugt zwischen 3 und 12 mm und am meisten bevorzugt zwischen 4 und 10 mm auf. Es hat sich herausgestellt, dass diese Bereiche für die Dicken der Trägerschicht eine ausreichende Stabilität während des Herstellungsverfahrens bereitstellen und darüber hinaus eine ausreichend hohe Trittschallabsorption und Formstabilität des Paneels bereitstellen.

In einer besonders bevorzugten Ausführungsform der Erfindung ist unter der Grundierungsschicht eine Primerschicht auf das Trägermaterial aufgetragen, bzw. vorgesehen. Die Primerschicht oder Haftvermittlerschicht verbessert dabei die Haftung der Grundierungsschicht auf dem Trägermaterial. Dem Fachmann ist eine Reihe von geeigneten Primerschichten bekannt, die von entsprechenden chemischen Fachfirmen kommerziell erhältlich sind.

In einer bevorzugten Ausführungsform weist das Paneel eine Primerschicht mit einer Flächenmasse zwischen 3 bis 20 g/m², bevorzugt mit einer Flächenmasse zwischen 5 bis 15 g/m², besonders bevorzugt mit einer Flächenmasse zwischen 7 und 12 g/m² und am meisten bevorzugt mit einer Flächenmasse zwischen 8 bis 10 g/m² auf.

Zum Drucken des dekorativen Musters wird eine polymerisierbare Druckfarbe (Tinte) verwendet, basierend auf polymerisierbaren Acrylatharzen und/ oder N-Vinylcaprolactam (eines flüssigen Reaktivverdünners), wie er von der BASF angeboten wird. Üblicherweise kommen im Stand der Technik als Druckfarbe Dispersionsfarben zum Einsatz, bestehend aus dem Fachmann geläufigen Verfahren angeriebenen Pigmentmischungen und Bindemitteln (gemein als Verschnitt bezeichnet) auf Basis von Casein oder Acrylatbindemitteln. Diese Dispersionsfarben werden regelmäßig bei dem üblicherweise zum Einsatz kommenden Tiefdruckverfahren verwendet. Dispersionsfarben sind Druckfarben, die in der Regel aus drei Hauptbestandteilen bestehen, nämlich (a) einem Lösungsmittel (üblicherweise Wasser), (b) Bindemittel in Form von Kunststoffpolymeren (Acrylate), die sich bei Verdunstung des Lösungsmittels zusammenlagern und eine feste Schicht bilden, sowie (c) Farbpigmente zur Erzeugung der gewünschten Deckung und des gewünschten Farbtons. Die Trocknung dieser Dispersionsfarben erfolgt also nicht durch eine Polymerisation, sondern durch ein Verflüchtigen des Lösungsmittels, da die Bindemittel bereits als Polymere vorliegen. Die in der Dispersion enthaltenen Polymere verbinden sich bei Verflüssigung des Bindemittels auf rein physikalische Weise und bilden eine feste, geschlossene Schicht.

Die Anmelder haben nun überraschend festgestellt, dass verbesserte Hafteigenschaften des Schichtsystems erreicht werden können, wenn nicht die üblichen Dispersionsfarben verwendet werden, sondern stattdessen polymerisierbare Druckfarben verwendet werden. Dies gilt insbesondere bei der bevorzugten Anwendung mit einer Polymerschicht, insbesondere mit Härtegradient. Der positive Effekt ist besonders ausgeprägt, wenn die Druckfarbe der Dekorschicht (d.h. des dekorativen Musters) und die Polymerschicht gemeinsam ausgehärtet bzw. polymerisiert werden (wenn die Dekorschicht direkt aufgedruckt wird, wie etwa im Digitaldruck, besteht die Dekorschicht quasi aus der Druckfarbe). Wie oben erwähnt wird unter Aushärtung einer Polymerschicht beziehungsweise einer polymerisierbaren Druckfarbe (wie polymerisierbare Acrylate bzw. UV-reaktive Farben im Allgemeinen) hier die chemische Reaktion verstanden, die bei der Polymerisation stattfindet. Hiervon zu unterscheiden ist das Trocknen derartiger Schichten, bei dem lediglich das Lösungsmittel, wie etwa der Wassergehalt der Druckfarbe beziehungsweise der Polymerschichten verdunstet bzw. auf rein physikalische Weise reduziert wird.

Durch die gemeinsame Aushärtung (Polymerisation) der polymerisierbaren Bestandteile (Acrylatsysteme und/oder N-Vinylcaprolactam) von Druckfarbe und Polymerschicht erfolgt eine chemische Vernetzung an der Grenzfläche der beiden Schichten, von der angenommen wird, dass sie für die verbesserte Haftung der Schichten verantwortlich ist. Die herkömmlich verwendeten Dispersions-Druckfarben weisen keine polymerisierbaren Bestandteile auf, so dass keine derartige chemische Vernetzung zwischen Druckfarbe, also der Dekorschicht, und der Polymerschicht stattfindet.

Polymerisierbare Bestandteile wie sie bei der vorliegenden Erfindung zum Einsatz kommen umfassen als Hauptbestandteile Acrylate, wie insbesondere Acrylat-Monomere, -Oligomere und optional Fotoinitiatoren aber auch N-Vinylcaprolactam als flüssigen Reaktivverdünner. N-Vinylcaprolactam kann der Druckfarbe zusätzlich zu den Acrylaten als Verdünner zugegeben werden und polymerisiert zusammen mit diesen aus. Alternativ ist es auch möglich auf die Acrylate zu verzichten und eine entsprechend größere Menge an N-Vinylcaprolactam vorzusehen, da das N-Vinylcaprolactam selbst polymerisiert werden kann. Details hierzu sind dem Fachmann beispielhaft aus der deutschen Veröffentlichungsschrift DE 197 02 476 A1 bekannt. In bevorzugten Ausführungsformen bestehen die polymerisierbaren Bestandteile daher im Wesentlichen aus N-Vinylcaprolactam. Die Fotoinitiatoren bewirken unter Einwirkung von Strahlung eine Polymerisation der Monomere bzw. Oligomere, wodurch die Druckfarbe schnell aushärtet. Die Verwendung einer Druckfarbe basierend auf einem polymerisierbaren Acrylat zusammen mit einer darauf aufgebrachten Polymerschicht (als Nutzschicht) erlaubt vorteilhaft den Verzicht auf eine Primerschicht, wie sie im Stand der Technik üblicherweise notwendig war, um die Haftung der Polymerschicht auf der Dekorschicht zu verbessern. Es hat sich gezeigt, dass die im Stand der Technik üblicherweise verwendeten Dispersionsfarben nur eine unbefriedigende Haftung mit der darauf aufgebrachten Polymerschicht mit Härtegradient erreichen. Mit der Verwendung eines Primers zwischen der Dekorschicht und der Polymerschicht (Nutzschicht) soll dieser Nachteil im Stand der Technik ausgeräumt werden.

Die für die vorliegende Erfindung verwendeten Druckfarben enthalten N-Vinylcaprolactam und/oder polymersierbare Acrylatsysteme. Polymerisierbare Druckfarben enthalten als Hauptbestandteile Bindemittel, nämlich reaktive Doppelbindungen enthaltene Harze; polymerisierbare Bestandteile in Form von Monomeren bzw. Oligomeren, wie z.B. etwa Acrylatmonomere und Acrylatoligomere; optional Fotoinitiatoren für strahlenhärtbare Druckfarben; Additive wie etwa das oben erwähnte N-Vinylcaprolactam, Entschäumer, Verlaufsadditive, Verdickungsmittel u.a.; Farbpigmente wie Phthalocyanin-Pigmente, Azofarbstoffe, Indigoide Farbmittel, Anilinschwarz und/ oder Pigmentruße; sowie Füllstoffe zur Erzielung bestimmter physikalisch technischer Eigenschaften. Generell bevorzugt sind die verwendeten Druckfarben für die vorliegende Erfindung weiter strahlenhärtbare, wie insbesondere durch UV-Strahlen härtbare (UVhärtbare) Druckfarben. Besonders bevorzugt ist die Druckfarbe ein UVhärtbares polymerisierbares Acrylatsystem.

Vorzugsweise basiert die Grundierung auf einer wässrigen Dispersion (bevorzugt einem wässrigen Acrylatsystem), welche eine geeignete Zusammensetzung aufweist, so dass sie mittels eines Vorhangbeschichtungsverfahrens aufgetragen werden kann. Es hat sich überraschend gezeigt, dass die Verwendung von wässrigen Dispersionen auch auf Kunststoffoberflächen, wie insbesondere auf PVC Oberflächen, zufriedenstellende Hafteigenschaften erreicht. Im Stand der Technik wurde die Grundierung bisher üblicherweise in einem Walzenauftragsverfahren auf die Oberfläche der Trägerschicht aufgetragen. Bei derartigen Walzenauftragsverfahren wird das Beschichtungsmaterial (die Grundierung) direkt von der Walze auf die zu beschichtenden Oberflächen abgegeben oder indirekt über ein Beschichtungsband, das mittels einer Presswalze auf die zu beschichtenden Bauteile gepresst wird. Die Erfinder der vorliegenden Anmeldung haben festgestellt, dass Oberflächen die auf diese Weise hergestellt wurden insbesondere bei fein detaillierten Druckbildern, wie sie typischerweise bei der Nachahmung von Echtholzoberflächen notwendig sind, nicht die eigentlich zu erwartende Auflösung und Schärfe erreichen. Insbesondere kommt es bei Verwendung von polymerisierbaren Druckfarben häufig zu störenden Streifen im Druckbild. Die Erfinder haben nun überraschend festgestellt, dass diese Probleme vermieden werden können, wenn anstatt eines Walzenauftragsverfahrens ein Vorhangbeschichtungsverfahren verwendet wird. Es wird vermutet, dass die Walzen bei Walzenauftragsverfahren, sei es, dass das Beschichtungsmaterial direkt von der Walze auf die zu beschichtende Oberfläche aufgetragen wird oder indirekt über ein Beschichtungsband, aufgrund ihrer Rundung in der übertragenen Beschichtung eine minimale Welligkeit der Oberfläche erzeugen. Die Berge und Täler dieser welligen Oberfläche sind jedoch so klein, dass die so hergestellten Oberflächen mit herkömmlichen Dispersionsfarben gut bedruckt werden können. Es wird jedoch vermutet, dass diese sehr geringe Unebenheit der so beschichteten Oberflächen bei der Verwendung von polymerisierbaren Druckfarben für die genannten Probleme verantwortlich ist. In jedem Fall kann durch das Gießen der Grundierung die unerwünschte Streifenbildung bei der Verwendung von polymerisierbaren Druckfarben (insbesondere polymerisierbaren Acrylatsystemen) wirksam unterbunden werden.

Vorhangbeschichtungsverfahren und entsprechende Anlagen sind dem Fachmann aus dem Stand der Technik (beispielsweise aus der EP 1 252 937 A1) vorbekannt, so dass auf eine detaillierte Beschreibung derselben hier verzichtet werden kann. Wichtig ist, dass bei Vorhangbeschichtungsverfahren ein flüssiger Vorhang von Beschichtungsmaterial erzeugt wird, durch den die zu beschichtenden Bauteile geführt werden. Ein Auftrag über Walzen findet nicht statt.

In einer weiteren bevorzugten Ausführungsform weist die Grundierungsschicht eine Flächenmasse zwischen 15 bis 150 g/m², bevorzugt eine Flächenmasse zwischen 30 bis 100 g/m², besonders bevorzugt eine Flächenmasse zwischen 40 und 70 g/m² und am bevorzugtesten eine Flächenmasse zwischen 50 bis 75 g/m² auf. Diese Flächenmasse führen in der bevorzugten Ausführungsform zu einer Dicke der Grundierungsschicht zwischen 5 und 300 µm, bevorzugt zwischen 15 und 200 µm, mehr bevorzugt zwischen 20 und 180 µm und am meisten bevorzugt zwischen 25 und 100 µm. Es hat sich herausgestellt, dass diese Flächenmassen bzw. Dicken der Grundierungsschicht einen optimalen Belag für das darauf aufgedruckte dekorative Muster bereitstellen.

In einer bevorzugten Ausführungsform werden in die Polymerschicht abriebfeste Partikel, insbesondere Korundpartikel, mit einem mittleren Durchmesser von 10 bis 100 µm, bevorzugt 20 bis 80 µm, mehr bevorzugt 25 bis 70 µm und besonders bevorzugt von 30 bis 60 µm eingebettet. Durch die abriebfesten Partikel besteht die Möglichkeit, die Lebensdauer eines erfindungsgemäßen Paneels erheblich zu steigern.

Die Gesamtdicke der Polymerschicht (Nutzschicht) nach dem Aushärten sollte vorzugsweise eine Dicke von 20 - 300 µm haben, mehr bevorzugt von 40 - 250 µm, noch mehr bevorzugt von 50 - 220 µm und am meisten bevorzugt von 60 - 180 µm. Es hat sich herausgestellt, dass diese Schichtdicken einerseits eine gute Abdeckung bzw. Einbindung der Korundpartikel erlauben. Bevorzugte Materialien für die Polymerschicht sind: 1,6 Hexandioldiacrylat, Polyesteracrylat, Polyurethanacrylsäureester und Dipropylendiglycoldiarcylat.

In einer bevorzugten Ausführungsform stellt das dekorative Muster, das auf die Grundierungsschicht beispielsweise mittels eines Digitaldruckverfahrens aufgebracht wurde, die einzige Dekorschicht des erfindungsgemäßen Paneels dar, d.h. es sind keine weiteren Dekorpapiere oder Dekorfolien vorgesehen. Es besteht somit keine Notwendigkeit mehr ein separates Dekorpapier oder dergleichen vorzusehen, was zu einer erheblichen Kostenreduzierung und Verfahrensvereinfachung bei der Herstellung eines erfindungsgemäßen Paneels führt.

Wie eingangs erwähnt, ist gemäß der Erfindung die Druckfarbe der Dekorschicht (des dekorativen Musters) gemeinsam mit der darüber aufgebrachten Polymerschicht ausgehärtet (polymerisiert), vorzugsweise durch eine gemeinsame Bestrahlung derselben. Hierdurch kommt es an der Grenzschicht zwischen der Druckfarbe und der darüber aufgebrachten Polymerschicht(en) teilweise zu einer chemischen Vernetzung der verwendeten Polymere. Es hat sich gezeigt, dass dabei eine besonders gute Haftung der Polymerschicht auf der Trägerschicht erreicht werden kann. Im Stand der Technik war es bisher immer notwendig zusätzlich zwischen der Dekorschicht und der aufgebrachten Polymerschicht einen Primer zu verwenden, um die Haftung der Polymerschicht zu verbessern. Mit der Ausführungsform der Erfindung kann dabei nicht nur auf den Primer verzichtet werden, sondern es hat sich sogar gezeigt, dass die erreichte Haftung der Polymerschicht im Vergleich zu herkömmlichen, primerbasierten Systemen, verbessert werden kann.

Im Folgenden soll die Erfindung anhand zweier nicht beschränkender Beispiele näher erläutert werden, wobei Beispiel 1 ein Vergleichsbeispiel ist und Beispiel 2 ein Beispiel der Erfindung ist:

### Beispiel 1: "Paneel mit herkömmlichem indirekten Tiefdruck"

Eine PVC-Trägerschicht mit einer Stärke von 4 mm wird zunächst über ein Walzenauftragswerk mit einem Primer auf Basis einer handelsüblichen wässrigen Acrylatdispersion versehen. In einem nächsten Schritt erfolgt das Glätten der PVC-Trägerschicht über ein Walzenauftragswerk mittels einer Spachtelmasse basierend auf einer hochgefüllten wässrigen Acrylatdispersion. Anschließend wird ein Druckgrund auf Basis einer mit Füllstoffen und Farbpigmenten versetzten wässrigen Acrylatdispersion mittels Gießverfahren appliziert. Nach jedem dieser Beschichtungsschritte erfolgt ein Zwischentrocknen bei Temperaturen zwischen 80 und 200 °C. Die so behandelten PVC-Träger werden einer Druckmaschine im Wesentlichen bestehend aus einer Gravurwalze und einer Gummiwalze für die Übertragung des Druckbildes vom Gravurzylinder auf die Platte zugeführt. Das Druckbild wird über 3 nachgeschaltete Druckwerke erzeugt, wobei durch jedes Druckwerk eine eigene Druckfarbe bestehend aus Farbpigmenten und einer wässrigen Acrylatdispersion aufgetragen wird. Bei einer Imitation eines dunklen Nußbaumholzes werden beispielsweise 5 g/m² Druckfarbe appliziert. Auf die Druckfarbenschicht wird im weiteren Prozess ein handelsüblicher UV-Primer über ein Walzenauftragswerk aufgetragen. Schließlich erfolgt der Auftrag der Polymerschicht wie in der WO 2008/061791 beschrieben, um eine Polymerschicht mit Härtegradient zu erzeugen. Hierzu wird in einem ersten Schritt ein doppelbindungshaltiges, mit Photoinitiatoren versehenes strahlenhärtbares Oligomer appliziert. Auf diese Schicht wird über eine Strukturträgerfolie nass-in-nass eine weitere Schicht aus einem doppelbindungshaltigen, mit Photoinitiatoren versehenen strahlenhärtbaren Oligomers gelegt und mittels einer UV-Strahlung polymerisiert. Nach Abziehen der Folie erhält man die fertige beschichtete Dekorplatte, die in einem weiteren Prozess in Paneele zerteilt werden kann, wobei an diese Paneele bekannte Kopplungselemente angefügt werden. Die so beschichtete Platte wird einem Labortest unterzogen. Beim Gitterschnitttest wird in diesem Fall eine zufriedenstellende 3 erzielt. Generell gilt hier, je dicker die Druckfarbenschicht für die Reproduktion eines Dekors aufgetragen werden muss, desto schlechter fällt das Ergebnis beim Gitterschnitttest aus. Schlechte Gitterschnittwerte haben ein erschwertes Anfräsen von Profilen für die Kopplungselemente zur Folge, da schnell Kantenausbrüche an der Polymerschicht erfolgen.

### Beispiel 2: "Paneele, bei denen das Muster mit strahlenhärtenden Druckfarben erzeugt wird"

Es wird eine 4 mm starke PVC-Trägerschicht verwendet und wie in Beispiel 1 beschrieben mit wässrigem Primer, Spachtel und Druckgrund versehen. Auf der so behandelten Platte wird mittels Digitaldrucker das gleiche Dekorbild wie in Beispiel 1 erzeugt. Verwendung finden dabei jedoch UV- strahlenhärtende Digitaldruckfarben. Für die Erzeugung des Druckbildes wird eine Farbmenge von etwa 2 g/m² benötigt. Die Farbe wird zunächst mit 150 mJ/cm² (Quecksilber) fixiert. Darauf erfolgt der Auftrag von 2 g/m² einer ersten UV-härtenden Schicht, die vorwiegend Dipropylenglycoldiacrylat enthält, auf diese nicht bestrahlte Schicht wird ein doppelbindungshaltiges, mit Photoinitiatoren versetztes Oligomer wie in Beispiel 1 aufgetragen. Auf diese Schicht wird mittels Strukturgeberfolie eine zweite Oligomerschicht wie in Beispiel 1 aufgelegt. Das Paket wird einer UV-Strahlenquelle zugeführt und dabei wird die strahlenhärtende Schicht polymerisiert. Die daraus resultierende Polymerschicht umfasst die Druckfarbe und alle darüber liegenden Schichten. Auch auf dieser Basis hergestellte Paneele werden einem Labortest unterzogen. Beim Gitterschnitttest treten keinerlei Abplatzungen innerhalb der verschiedenen Beschichtungsebenen auf.

### 4. Beschreibung von bevorzugten Ausführungsformen

Im Folgenden wird die Erfindung anhand der Figuren näher erläutert, wobei:
Fig. 1 eine schematische Darstellung eines erfindungsgemäßen Paneels 10 mit einer Trägerschicht 12 aus Polyvinylchlorid zeigt; und
Fig. 2 eine Anlage zur Beschichtung in schematischer Ansicht zeigt.

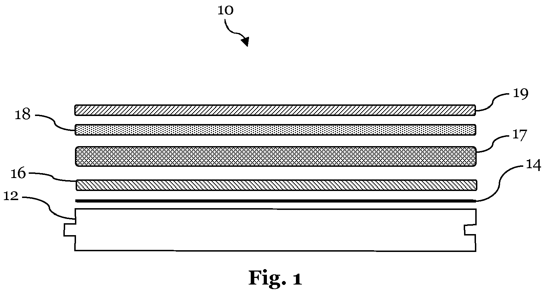

In Fig. 1 ist die Trägerschicht 12 gezeigt, die an ihren jeweiligen Kanten Feder-Nutverbindungen aufweist, die es erlauben einzelne Paneele 10 miteinander zu verbinden.

Oberhalb der Trägerschicht 12 ist eine Primerschicht 14 vorgesehen. Auf der Primerschicht 14 ist in dem gezeigten Ausführungsbeispiel eine Ausgleichsschicht 16 angeordnet. Die Ausgleichsschicht 16 besteht dabei aus einer Spachtelmasse aus einer hochgefüllten Acrylatdispersion. Auf der Ausgleichsschicht 16 ist eine Grundierungsschicht 17 angeordnet. Auf der Oberseite der Grundierungsschicht 17 ist ein dekoratives Muster (Dekorschicht) 18 aufgedruckt, vorzugsweise mittels eines Digitaldruckverfahrens. Dieses dekorative Muster kann je nach Anwendung ein beliebiges Muster darstellen. Über Grundierung und Dekorschicht ist ein mittels UV-Bestrahlung aushärtbares Polymerschichtsystem 19 vorgesehen.

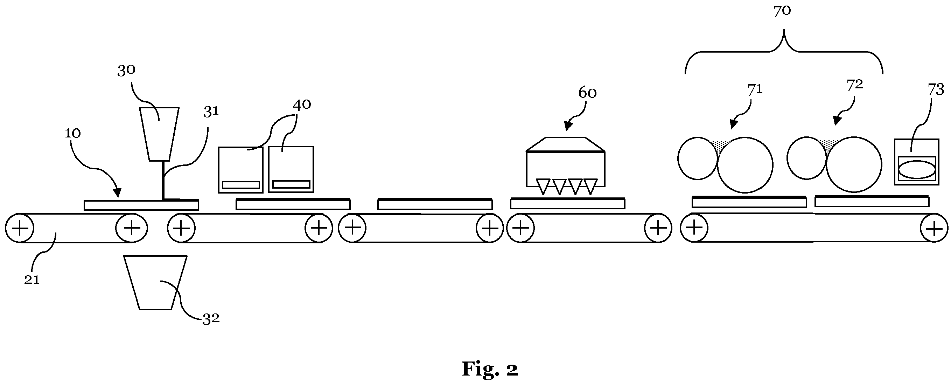

Im Folgenden soll anhand der Fig. 2 beispielhaft die Herstellung eines erfindungsgemäßen Paneels, bzw. das erfindungsgemäße Verfahren, beschrieben werden. Fig. 2 zeigt schematisch eine Beschichtungsanlage zur Beschichtung von Platten bzw. Paneelen 10. Die Platten 10 sind beispielsweise große PVC-Platten mit einer Dicke von 4-8mm und werden in abschließenden, nicht gezeigten, Verarbeitungsschritten in die gewünschte Größe und Form geschnitten, wie dies aus dem Stand der Technik bekannt ist. Die Platten 10 werden über eine Rollenförderanlage 21 durch die verschiedenen Stationen der Beschichtungsanlage geführt. Die dargestellten Beschichtungsstationen sind nicht abschließend zu verstehen, sondern dienen nur beispielhaft der Erläuterung des erfindungsgemäßen Verfahrens. Vor, hinter und zwischen den gezeigten Stationen können weitere Bearbeitungsstationen vorgesehen sein, wie beispielsweise weitere Trocknungsstationen, Stationen zur Aufbringung von Primern, Stationen zur Aufbringung von Spachteln usw. In der ersten dargestellten Station 30 wird die Grundierung mittels eines flüssigen Vorhangs 31 von Beschichtungsmaterial auf eine Hauptoberfläche der Platte 10 aufgetragen. Der flüssige Vorhang 31 erstreckt sich über die komplette Plattenbreite und die Platten werden durch diesen Vorhang transportiert und dabei beschichtet. Unterhalb der Vorrichtung 30 zur Ausgabe des Vorhangs befindet sich ein Auffangbehälter 32 in den der flüssige Vorhang fällt, wenn keine Platte durch den Vorhang hindurch geführt wird, wie beispielsweise bei der Lücke zwischen zwei aufeinanderfolgenden Platten. Als Beschichtungsmaterial für die Grundierung wird vorzugsweise eine wässrige Acrylat-Dispersion verwendet. In einer darauf folgenden Trocknungsstation 40 wird die aufgetragene Grundierung mit Heißluft getrocknet, d.h. der wässrigen Acrylat-Dispersion wird das Wasser entzogen.

In Station 60 wird mittels eines Digitaldrucks ein dekoratives Dekor, wie insbesondere ein Echtholzdekor, auf die so behandelte Grundierung aufgedruckt. Nach dem Druck wird in der Beschichtungsstation 70 eine Polymerschicht aufgetragen. Die Polymerschicht wird mit einem Härtegradienten aufgetragen, so dass die Härte der Polymerschicht mit zunehmender Tiefe von der Oberfläche der Polymerschicht her gesehen im Wesentlichen kontinuierlich abnimmt. Zu diesem Zweck wird in einer ersten Beschichtungseinheit 71 eine erste Polymerschicht basierend auf einem polymerisierbaren Acrylatsystem aufgetragen. Auf diese erste Polymerschicht wird in Station 72 eine weitere Polymerschicht Nass-in-Nass aufgetragen. Die zweite Polymerschicht weist beispielsweise einen höheren Doppelbindungsanteil auf, wie es im Detail in der oben erwähnten Anmeldung zum Härtegradienten beschrieben ist. Die beiden Polymerschichten werden in den Stationen 71 und 72 Nass-auf-Nass aufgetragen, so dass es an der Grenzfläche der beiden Schichten zu einer teilweisen Vermischung kommt. In Station 73 werden die beiden Polymerschichten unter Einwirkung von UV-Strahlung gemeinsam ausgehärtet.

Bevorzugt ist die Station 60 eine Digitaldruckstation. Erfindungsgemäß wird eine Druckfarbe basierend auf einem polymerisierbaren Acrylat verwendet. Zwischen den Stationen 60 und 70 findet keine Aushärtung der Druckfarbe statt, sondern allenfalls ein Zwischentrocknungsschritt bei welchem Schritt dem polymerisierbaren Acrylat der Druckfarbe etwas Feuchtigkeit entzogen wird. In der Aushärtstation 73 werden dann die Druckfarbe und die ersten und zweiten Polymerschichten gemeinsam ausgehärtet, was zu einer besonders widerstandsfähigen Oberfläche führt.

## Patentansprüche

1. Paneel, insbesondere ein Wand-, Decken- oder Fußbodenpaneel, umfassend eine Trägerschicht (12) aus einem Kunststoffmaterial und eine Grundierungsschicht (17), wobei die Grundierungsschicht (17) ein darauf aufgedrucktes dekoratives Muster (18) umfasst und über der Grundierungsschicht und dem dekorativen Muster eine ausgehärtete Polymerschicht (19) vorgesehen ist, **dadurch gekennzeichnet, dass** die zum Drucken des dekorativen Musters (18) verwendete Druckfarbe ein polymerisierbares Acrylat und/oder N-Vinylcaprolactam enthält, und
die Druckfarbe und die Polymerschicht gemeinsam ausgehärtet wurden.

2. Paneel nach Anspruch 1, **dadurch gekennzeichnet dass** die Trägerschicht (12) auf Polyvinylchlorid basiert.

3. Paneel nach einem der vorhergehenden Ansprüche, **dadurch gekennzeichnet, dass** die Polymerschicht (19) einen Härtegradienten aufweist, so dass die Härte der Polymerschicht mit zunehmender Tiefe von der Oberfläche der Polymerschicht her gesehen im Wesentlichen kontinuierlich abnimmt.

4. Paneel nach einem der vorhergehenden Ansprüche, **dadurch gekennzeichnet, dass** die zum Drucken des dekorativen Musters (18) verwendete Druckfarbe ein polymerisierbares Acrylat enthält und N-Vinylcaprolactam enthält in einem Gewichtsanteil (%) in der Druckfarbe von 2 bis 50 %.

5. Paneel nach einem der vorhergehenden Ansprüche, **dadurch gekennzeichnet, dass** die Grundierung (17) auf einem wässrigen Acrylatsystem basiert und geeignet ist, um mittels eines Vorhangbeschichtungs-Verfahrens aufgetragen zu werden, wobei die Grundierung (17) kein UV-aushärtbarer Lack ist.

6. Paneel nach einem der vorhergehenden Ansprüche, **dadurch gekennzeichnet, dass** in der Trägerschicht (12) zwischen 5 bis 50 Gew.-% eines Weichmachers vorgesehen ist, wobei als Weichmacher insbesondere Diethylhexylphthalat und/oder Diisonoylphthalat vorgesehen ist.

7. Paneel nach einem der vorhergehenden Ansprüche, **dadurch gekennzeichnet, dass** die Trägerschicht (12) eine Dicke zwischen 3 und 20 mm aufweist.

8. Paneel nach einem der vorhergehenden Ansprüche, **dadurch gekennzeichnet, dass** unter der Grundierungsschicht (17) eine Primerschicht (14) auf dem Trägermaterial (12) vorgesehen ist, wobei die Primerschicht (14) eine Flächenmasse zwischen 3 bis 20 g/m², aufweist.

9. Paneel nach einem der vorhergehenden Ansprüche, **dadurch gekennzeichnet, dass** die Grundierung (17) mittels eines Vorhangbeschichtungs-Verfahrens aufgetragen wurde.

10. Paneel nach einem der vorhergehenden Ansprüche, **dadurch gekennzeichnet, dass** in der Polymerschicht abriebfeste Partikel vorgesehen sind bzw. werden, wobei die abriebfesten Partikel einen mittleren Durchmesser von 10 bis 150 µm aufweisen und weiter bevorzugt aus Korund bestehen.

11. Paneel nach einem der vorhergehenden Ansprüche, **dadurch gekennzeichnet, dass** die Polymerschicht (19) auf einem oder mehreren der folgenden Acrylate basiert: 1,6-Hexandioldiacrylat, Polyesteracrylat, Polyurethanacrylsäureester und Dipropylenglycoldiacrylat.

12. Verfahren zur Herstellung eines Paneels, insbesondere eines Wand-, Decken- oder Fußbodenpaneels, umfassend folgende Schritte:
(i) Bereitstellen einer Trägerschicht aus einem Kunststoffmaterial, insbesondere basierend auf Polyvinylchlorid;
(ii) Auftragen einer Grundierungsschicht;
(iii) Aufdrucken eines dekorativen Musters auf die Grundierungsschicht, wobei die zum Drucken des dekorativen Musters verwendete Druckfarbe ein polymerisierbares Acrylat und/oder N-Vinylcaprolactam enthält;
(iv) Auftragen zumindest einer ersten Polymerschicht auf die Grundierungsschicht und das dekorative Muster; und
(v) Härten der Polymerschicht, wobei zumindest die Druckfarbe und die aufgetragene Polymerschicht gemeinsam ausgehärtet werden.

13. Verfahren nach Anspruch 12, **dadurch gekennzeichnet, dass** nach Schritt (iv) zumindest eine zweite flüssige Polymerschicht auf die noch feuchte erste Polymerschicht aufgetragen wird, so dass eine teilweise Vermischung der Polymerschichten stattfindet, und wobei dieser Schritt und Schritt (v) so durchgeführt werden, dass die ausgehärtete Polymerschicht einen Härtegradient aufweist, wobei die Härte der Beschichtung mit zunehmender Tiefe von der Oberfläche der resultierenden Beschichtung her gesehen abnimmt.

14. Verfahren nach einem der vorhergehenden Verfahrensansprüchen, **dadurch gekennzeichnet, dass** das dekorative Muster mittels einer polymerisierbaren Druckfarbe aufgedruckt wird, welche Druckfarbe enthält: a) ein polymerisierbares Acrylat; sowie b) N-Vinylcaprolactam in einem Gewichtsanteil (%) in der Druckfarbe von 2 bis 50, mehr bevorzugt 5 bis 40 und am meisten bevorzugt von 10 bis 30 %.

15. Verfahren nach einem der vorhergehenden Verfahrensansprüchen, **dadurch gekennzeichnet, dass** die Grundierung in Schritt (ii) mittels eines Vorhangbeschichtungs-Verfahrens aufgetragen wird.

## Claims

1. A panel, in particular a wall, ceiling or floor panel, comprising a carrier layer (12) of a plastic material and a base layer (17), the base layer (17) comprising a decorative pattern (18) printed thereon and over the base layer and the decorative pattern a cured polymer layer (19) is provided, **characterized in that** the printing ink used for printing the decorative pattern (18) includes a polymerizable acrylate and/or N-vinylcaprolactam, and the printing ink and the polymer layer were cured together.

2. The panel of claim 1, **characterized in that** the carrier layer (12) is based on polyvinyl chloride.

3. The panel of any of the preceding claims, **characterized in that** the polymer layer (19) has a hardness gradient, so that the hardness of the polymer layer decreases substantially continuously with increasing depth from the surface of the polymer layer.

4. The panel of any of the preceding claims, **characterized in that** the printing ink used to print the decorative pattern (18) includes a polymerizable acrylate and includes N-vinylcaprolactam in a proportion by weight (%) in the printing ink of 2 to 50%.

5. The panel of any of the preceding claims, **characterized in that** the base layer (17) is based on an aqueous acrylate system and is suitable to be applied by means of a curtain coating process, wherein the base layer (17) is not a UV-curable lacquer.

6. The panel of any of the preceding claims, **characterized in that** in the carrier layer (12) is provided between 5 to 50 % by weight of a plasticizer, the plasticizer being provided in particular as diethylhexylphthalate and/or diisonoylphthalate.

7. The panel of any of the preceding claims, **characterized in that** the carrier layer (12) has a thickness between 3 and 20 mm.

8. The panel of any of the preceding claims, **characterized in that** a primer layer (14) is provided under the base layer (17) on the carrier material (12), the primer layer (14) having a basis weight between 3 and 20 g/m².

9. The panel of any of the preceding claims, **characterized in that** the base layer (17) has been applied by means of a curtain coating process.

10. The panel of any of the preceding claims, **characterized in that** abrasion-resistant particles are provided or are to be provided in the polymer layer, wherein the abrasion-resistant particles have an average diameter of 10 to 150 µm and further consist preferably of corundum.

11. The panel of any of the preceding claims, **characterized in that** the polymer layer (19) is based on one or more of the following acrylates: 1.6-hexanediol diacrylate, polyester acrylate, polyurethane acrylic acid ester and dipropylene glycol diacrylate.

12. A method for producing a panel, in particular a wall, ceiling or floor panel, comprising the following steps:
(i) providing a carrier layer of a plastic material, in particular based on polyvinyl chloride;
(ii) applying a base layer;
(iii) printing a decorative pattern on the base layer, wherein the printing ink used to print the decorative pattern includes a polymerizable acrylate and/or N-vinylcaprolactam;
(iv) applying at least a first polymer layer to the base layer and the decorative pattern; and
(v) curing the polymer layer, wherein at least the printing ink and the applied polymer layer are cured together.

13. The method of claim 12, **characterized in that** after step (iv) at least one second liquid polymer layer is applied to the still moist first polymer layer, so that a partial mixing of the polymer layers takes place, and wherein this step and step (v) are carried out in such a way **in that** the hardened polymer layer has a hardness gradient, the hardness of the layering decreasing with increasing depth from the surface of the resulting layering.

14. The method of any of the preceding method claims, **characterized in that** the decorative pattern is printed by means of a polymerizable printing ink, which printing ink contains: a) a polymerizable acrylate; and b) N-vinylcaprolactam in a proportion by weight (%) in the printing ink from 2 to 50, more preferably from 5 to 40, and most preferably from 10 to 30%.

15. The method of any of the preceding method claims, **characterized in that** the base layer in step (ii) is applied by means of a curtain coating process.

## Revendications

1. Panneau, en particulier panneau de mur, de plafond ou de sol, comprenant une couche de support (12) composée d'un matériau en matière plastique et une couche d'apprêt (17), dans lequel la couche d'apprêt (17) comprend un motif (18) décoratif imprimé sur celle-ci et une couche de polymère (19) durcie est prévue par-dessus la couche d'apprêt et le motif décoratif, **caractérisé en ce que** le colorant d'impression utilisée pour imprimer le motif (18) décoratif contient un N-vinylcaprolactame et/ou un acrylate polymérisable, et le colorant d'impression et la couche de polymère ont été durcis conjointement.

2. Panneau selon la revendication 1, **caractérisé en ce que** la couche de support (12) est à base de poly(chlorure de vinyle).

3. Panneau selon l'une des revendications précédentes, **caractérisé en ce que** la couche de polymère (19) présente un gradient de dureté de sorte que la dureté de la couche de polymère diminue sensiblement en continu au fur et à mesure que la profondeur augmente, dans une vue depuis la surface de la couche de polymère.

4. Panneau selon l'une des revendications précédentes, **caractérisé en ce que** le colorant d'impression utilisé pour imprimer le motif (18) décoratif contient un acrylate polymérisable et contient du N-vinylcaprolactame en une fraction de poids (%) dans le colorant d'impression allant de 2 à 50 %.

5. Panneau selon l'une des revendications précédentes, **caractérisé en ce que** l'apprêt (17) est à base d'un système acrylate aqueux et adapté pour être appliqué au moyen d'un procédé de revêtement au rideau, dans lequel l'apprêt (17) n'est pas un vernis pouvant être durci par rayonnement UV.

6. Panneau selon l'une des revendications précédentes, **caractérisé en ce qu'**est prévu, dans la couche de support (12), entre 5 à 50 % en poids d'un plastifiant, dans lequel en particulier du diéthylhexylphtalate et/ou du di-isononylphtalate sont prévus en tant que plastifiant.

7. Panneau selon l'une des revendications précédentes, **caractérisé en ce que** la couche de support (12) présente une épaisseur entre 3 et 20 mm.

8. Panneau selon l'une des revendications précédentes, **caractérisé en ce qu'**une couche de primaire (14) sur le matériau de support (12) est prévue sous la couche d'apprêt (17), dans lequel la couche de primaire (14) présente une masse surfacique entre 3 à 20 g/m².

9. Panneau selon l'une des revendications précédentes, **caractérisé en ce que** l'apprêt (17) a été appliqué au moyen d'un procédé de revêtement au rideau.

10. Panneau selon l'une des revendications précédentes, **caractérisé en ce que** des particules résistances à l'abrasion sont prévues dans la couche de polymère, dans lequel les particules résistantes à l'abrasion présentent un diamètre moyen allant de 10 à 150 µm et sont constituées par ailleurs de manière préférée de corindon.

11. Panneau selon l'une des revendications précédentes, **caractérisé en ce que** la couche de polymère (19) est à base d'un ou plusieurs des acrylates suivants : 1,6-hexandioldiacrylate, poly(ester d'acrylate), ester d'acide acrylique-polyuréthane et diacrylate de dipropylèneglycol.

12. Procédé servant à fabriquer un panneau, en particulier un panneau de mur, de plafond ou de sol, comprenant les étapes suivantes :
(i) fourniture d'une couche de support composée d'un matériau en matière plastique, en particulier à base de chlorure de polyvinyle ;
(ii) application d'une couche d'apprêt ;
(iii) impression d'un motif décoratif sur la couche d'apprêt, dans lequel le colorant d'impression utilisée pour imprimer le motif décoratif contient un N-vinylcaprolactame et/ou un acrylate polymérisable ;
(iv) application d'au moins une première couche de polymère sur la couche d'apprêt et le motif décoratif ; et
(v) durcissement de la couche polymère, dans lequel au moins le colorant d'impression et la couche polymère appliquée sont durcis conjointement.

13. Procédé selon la revendication 12, **caractérisé en ce qu'**après l'étape (iv) au moins une deuxième couche de polymère liquide est appliquée sur la première couche de polymère encore humide de sorte qu'un mélange partiel des couches de polymère ait lieu, et dans lequel cette étape et l'étape (v) sont mises en oeuvre de telle sorte que la couche de polymère durcie présente un gradient de dureté, dans lequel la dureté du revêtement diminue au fur et à mesure que la profondeur augmente, dans une vue depuis la surface du revêtement en résultant.

14. Procédé selon l'une des revendications de procédé précédentes, **caractérisé en ce que** le motif décoratif est imprimé au moyen d'un colorant d'impression polymérisable, lequel colorant d'impression contient : a) un acrylate polymérisable ; ainsi que b) du N-vinylcaprolactame en une fraction de poids (%) dans le colorant d'impression allant de 2 à 50, de manière davantage préférée de 5 à 40 et de manière préférée entre toutes de 10 à 30 %.

15. Procédé selon l'une des revendications précédentes, **caractérisé en ce que** l'apprêt est appliqué à l'étape (ii) au moyen d'un procédé de revêtement au rideau.
